(19) Europäisches Patentamt
European Patent Office
Office européen des brevets

(11) **EP 2 323 240 B1**

(12) **EUROPÄISCHE PATENTSCHRIFT**

(45) Veröffentlichungstag und Bekanntmachung des Hinweises auf die Patenterteilung:
**25.12.2013  Patentblatt 2013/52**

(51) Int Cl.:
**H02J 9/06** *(2006.01)*        **H05B 33/08** *(2006.01)*

(21) Anmeldenummer: **11154704.8**

(22) Anmeldetag: **19.01.2007**

(54) **LED-Treiberschaltung**

LED driver circuit

Circuit de commande de DEL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **21.04.2006  DE 102006018531**
**03.07.2006  DE 102006030655**

(43) Veröffentlichungstag der Anmeldung:
**18.05.2011  Patentblatt 2011/20**

(62) Dokumentnummer(n) der früheren Anmeldung(en) nach Art. 76 EPÜ:
**10169401.6 / 2 234 240**
**07702900.7 / 2 011 213**

(73) Patentinhaber: **Tridonic GmbH & Co KG**
**6851 Dornbirn (AT)**

(72) Erfinder:
• **Stevens, Frederick**
**Spennymoor**
**Durham DL16 7LE (GB)**
• **Rohner, Daniel**
**1220 Wien (AT)**
• **Wallhead, Geoff**
**Newton Aycliffe**
**Durham DL5 5HL (GB)**
• **Mair, Alexander**
**1220 Wien (AT)**

(74) Vertreter: **Rupp, Christian**
**Mitscherlich & Partner**
**Patent- und Rechtsanwälte**
**Sonnenstraße 33**
**80331 München (DE)**

(56) Entgegenhaltungen:
**GB-A- 2 258 571        GB-A- 2 382 238**
**JP-A- 2000 235 055     US-A1- 2005 110 469**
**US-A1- 2005 151 485    US-B1- 6 304 039**
**US-B1- 6 502 044       US-B2- 6 858 994**
**US-B2- 6 897 623**

• **RICO-SECADES M ET AL: "Evaluation of a low cost permanent emergency lighting system based on high efficiency LEDs", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 1, 12. Oktober 2003 (2003-10-12), Seiten 542-546, XP010676072, DOI: DOI:10.1109/IAS. 2003.1257553 ISBN: 978-0-7803-7883-4**

EP 2 323 240 B1

**Beschreibung**

Die vorliegende Erfindung bezieht sich auf Schaltungen zum Betrieb von Leuchtdioden.

Aus der Druckschrift US 6,502,044 B1 ist eine Schaltung zum Betreiben einer LED-Lampe. Diese Schaltung umfasst einen Boost-Konverter aufweisend einen Transistor, zwei Spulen, eine Diode und einen Widerstand. Der Boost-Konverter betreibt die LED-Lampe ausgehend von einer Batterie-Spannung. Wenn der Transistor eingeschaltet ist, fließt ein Strom von der Batterie durch die Spulen, den Transistor und den Widerstand. Ist hingegen der Transistor ausgeschaltet, so entmagnetisieren sich die Spulen durch die Diode des Boost-Konverters.

Die Druckschrift GB 2 258 571 A beschreibt ein Notfall-Beleuchtungssystem, welches eine Vielzahl von Lichteinheiten inklusive Leuchten, eine Kontrolleinheit, eine Spannungsversorgung in Form einer Batterie und eine Lichtdetektionseinheit umfasst. Das vorgenannte Notfall-Beleuchtungssystem hat u.a. zur Aufgabe zu testen, ob die Leuchten des Systems funktionieren. Dies geschieht mithilfe einer Lichtsensor-Einheit, die der Kontrolllogik mitteilt, ob die Lichtquelle leuchtet.

Die Druckschrift JP 2000 235055 A bezieht sich auf eine Messvorrichtung mit einer Stromversorgungseinrichtung für die Zufuhr eines vorgegebenen Stroms zu einer angeschlossenen externen Vorrichtung über einen Anschluss. Die Messvorrichtung umfasst auch ein Unterscheidungsmittel zum Unterscheiden des Typs des externen Geräts auf Basis der an dem Anschluss anliegenden Spannung Va.

Die Druckschrift US 6,304,039 B1 offenbart eine Schaltung zum Betreiben einer elektrolumineszierenden Lampe. Die Spannung umfasst Mittel zum Erzeugen einer DC-Spannung zum Versorgen von zwei FET-Leistungstreibern, die wiederum mit der Lampe gekoppelt sind. Mit der Lampe gekoppelte Erfassungsmittel erfassen die der Lampe zugeführten Spannungen. Eine Soft-Start-Schaltung erhält eingangsseitig dieses Messsignal, sowie ein Signal aus einer Spezialeffekt-Schaltung, und dient zur Steuerung der Geschwindigkeit, mit der die Helligkeit der Lampe erhöht bzw. gesenkt wird.

Die Druckschrift US 2005/0151485 A1 betrifft den Start eines Spannungskonverters zum Wandeln einer Netzspannung in einen passenden Effektivwert der Lastspannung. Wenn die Last, insbesondere eine Lampe gestartet wird, wird der Spannungskonverter entsprechend einem Soft-Start derart betrieben, dass der Effektwert der Lastspannung von einem sehr kleinen Wert hin zu einem größeren Wert erhöht wird.

Die Druckschrift US 2005/0110469 A1 betrifft einen Spannungswandler aufweisend eine Treiberschaltung zum Steuern eines Schaltelements, eine Start/Stopp-Schaltung zum Ein- und Ausschalten der Treiberschaltung in Abhängigkeit von einem Helligkeits-Steuersignal zum Einstellen der Helligkeit einer Lichtquelle, eine Erfassungseinheit zum Erfassen, ob die Ausgangsspannung größer als eine vordefinierte Spannung ist, und eine Soft-Start-Schaltung zum Erhöhen der usgangsspannung.

Auch wenn in der vorliegenden Beschreibung die Erfindung bezugnehmend auf Notlichtgeräte mit LEDs beschrieben werden wird, so ist zu verstehen, dass sich die Erfindung ganz allgemein auf LED-Betriebsschaltungen bezieht.

Notlichtgeräte weisen dementsprechend als zentrales Element eine Energiespeichereinheit, insbesondere eine Batterie bzw. einen Akkumulator auf, welche während eines Normal- bzw. Ladebetriebs durch die allgemeine Netzversorgungsspannung aufgeladen wird. Hierzu ist eine Ladeschaltung vorgesehen, welche eingangsseitig mit der Netzversorgungsspannung verbunden ist und während des Ladebetriebs der Energiespeichereinheit permanent Energie zuführt, welche diese speichert. Erst im Falle des Auftretens eines Notzustands, der von derartigen Geräten durch eine Überwachung der Netzversorgungsspannung üblicherweise selbständig erkannt wird, wird in einen Notlichtbetrieb gewechselt, in dem die Lichtquelle aktiviert und betrieben wird, wozu - sofern erforderlich - die von der Energiespeichereinheit zur Verfügung gestellte Energie genutzt wird. Da die Speicherkapazität der Energiespeichereinheit selbstverständlich begrenzt ist, werden vorzugsweise Lichtquellen eingesetzt, welche verhältnismäßig wenig Energie verbrauchen. Dementsprechend werden derartige Notlichtgeräte bevorzugt mit Gasentladungslampen, insbesondere Leuchtstoffröhren ausgestattet. Zunehmend finden allerdings auch Lichtquellen in Form von lichtemittierenden Halbleitern, insbesondere LEDs Verwendung, da auch diese Lichtquellen einen hohen Wirkungsgrad aufweisen und dementsprechend energiesparend eingesetzt werden können.

Der vorliegenden Erfindung liegt nunmehr die Aufgabe zugrunde, eine Schaltung zum Betrieb von LEDs vorzuschlagen.

Diese Aufgabe wird durch die Merkmale der unabhängigen Ansprüche gelöst. Vorteilhafte Weiterbildungen der Erfindung sind Gegenstand der Unteransprüche.

Die Erfindung schlägt vor eine Schaltung zum Betreiben wenigstens einer LED, aufweisend: - eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, die den zeitlich gemittelten Wert des Stroms durch die LED anhand des Werts des Erfassungssignals am Ende des Einschaltzyklus sowie des Werts am Ende der Entmagnetisierungsphase ermittelt.

Die Steuereinheit kann die Schaltfrequenz und/oder das Tastverhältnis abhängig wenigstens von dem erfassten zeitlichen Mittelwert des Stroms durch die LED einstellen.

Zum Dimmen der LED kann die Steuereinheit der hochfrequenten Taktung des Schalters eine im Vergleich dazu niederfrequente Modulation überlagern und/oder die hochfrequente Taktung verändern.

Die niederfrequente Modulation kann eine PWM-Modulation sein.

Die Treiberschaltung kann ausgehend von einer Batterie, ggf. assistiert von einer Netzspannung versorgt sein oder rein durch Netzspannung versorgt sein.

Es kann vorgesehen sein eine Batterieentladestrom-Erfassungseinheit, die mit der Steuereinheit funktionell verbinden ist, wobei zur Regelung des Batterieentladestroms der Strom durch die LED abhängig von dem erfassten Batterieentladestrom einstellbar ist.

Die Batterie kann mit einer mit Netzspannung versorgte Ladeschaltung verbunden sein.

Die Treiberschaltung kann die LED dimmen, wenn der Mittelwert der Netzspannung unter einen Schwellenwert absinkt.

Die Ladeschaltung kann einen Flyback-Konverter aufweisen.

Der Flyback-Konverter kann gepulst angesteuert sein, wenn der Mittelwert der Netzspannung unter einen Schwellenwert absinkt.

Es kann eine Batteriespannung-Erfassungsschaltung vorgesehen sein.

Der Strom durch die LED kann abhängig von einem Ausgangssignal der Batteriespannung-Erfassungsschaltung einstellbar sein.

Der Batterieladestrom kann erfasst und ggf. geregelt werden.

Die Steuereinheit kann die LED-Spannung erfassen.

Die Steuereinheit kann bei Inbetriebnahme eine Testmessung elektrischer Parameter ausführen, um herauszufinden, ob eine bzw. welche LED an die Treiberschaltung angeschlossen ist.

Die Steuereinheit kann den Betriebsstrom durch die LED abhängig von dem Ergebnis der Testmessung einstellen.

Die Testmessung kann in dem Anlegen einer verhältnismässig kleinen Spannung durch entsprechende Ansteuerung der Treiberschaltung und dem Messen des sich ergebenden LED-Stroms bestehen.

Die Steuereinheit kann bei Inbetriebnahme die LED-Spannung, durch entsprechende Ansteuerung des Schalters der Treiberschaltung, von einem niedrigen Wert aus zu einem stationären Betriebswert erhöhen.

Weiterhin schlägt die Erfindung vor eine Schaltung zum Betreiben wenigstens einer LED, aufweisend:

-    eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, weiterhin aufweisend eine Batterieentladestrom-Erfassungseinheit, die mit der Steuereinheit funktionell verbinden ist, wobei zur Regelung des Batterieentladestroms der Strom durch die LED abhängig von dem erfassten Batterieentladestrom durch Einstellung des Schaltverhaltens des Schalters der Treiberschaltung einstellbar ist.

Die Erfindung schlägt auch vor eine Schaltung zum Betreiben wenigstens einer LED, aufweisend:

-    eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungs-Strompfad bei geöffnetem Schalter ein Stromerfassungsmittel vorgesehen ist, weiterhin aufweisend eine Batteriespannung-Erfassungsschaltung, wobei der der Strom durch die LED abhängig von einem Ausgangssignal der Batteriespannung-Erfassungsschaltung durch Einstellung des Schaltverhaltens des Schalters der Treiberschaltung einstellbar ist.

Eine weiterer Aspekt der Erfindung bezieht sich auf eine Schaltung zum Betreiben wenigstens einer LED, aufweisend:

-    eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, bei der die Steuereinheit bei Inbetriebnahme eine Testmessung elektrischer Parameter ausführt, um herauszufinden, ob eine bzw. welche LED an die Treiberschaltung angeschlossen ist.

Die Erfindung betrifft weiterhin eine Schaltung zum Betreiben wenigstens einer LED, aufweisend:

-    eine Treiberschaltung mit einer Spule und einem mit der Spule in Serie geschalteten und hochfrequent getakteten Schalter, wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal zu einer Steuereinheit liefert, bei der die Steuereinheit bei Inbetriebnahme die LED-Spannung, durch entsprechende Ansteuerung des Schalters der Treiberschaltung, von einem niedrigen Wert aus zu einem stationären Betriebswert erhöht.

Ein Notlichtgerät kann eine Schaltung der oben angeführten Art aufweisen.

Die Erfindung schlägt auch vor ein Verfahren zur Ermittlung des Stroms durch eine LED, die durch eine Schaltung betrieben wird, die aufweist:

- eine Spule und einen mit der Spule in Serie geschalteten Schalter,
  wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei der zeitlich gemittelten Wert des Stroms durch die LED anhand des Werts des Erfassungssignals am Ende des Einschaltzyklus sowie des Werts am Ende der Entmagnetisierungsphase ermittelt wird.

Ein weiteres Verfahren zum Betreiben einer LED mit einer Schaltung wird vorgeschlagen, wobei die Schaltung aufweist:

- eine Spule und einen mit der Spule in Serie geschalteten Schalter,
  wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei die LED ausgehend von einer Batterie betrieben wird,
  wobei der Batterieentladestrom erfasst wird und zur Regelung des Batterieentladestroms der Strom durch die LED abhängig von dem erfassten Batterieentladestrom durch Einstellung des Schaltverhaltens des Schalters der Treiberschaltung eingestellt wird.

Ein weitere Aspekt der Erfindung bezieht sich auf ein Verfahren zum Betreiben einer LED mit einer Schaltung, die aufweist:

- eine Spule und einen mit der Spule in Serie geschalteten Schalter,
  wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei die LED ausgehend von einer Batterie betrieben wird,
wobei die Batteriespannung erfasst wird und der Strom durch die LED abhängig von einem Ausgangssignal der Batteriespannung-Erfassungsschaltung durch Einstellung des Schaltverhaltens des Schalters der Treiberschaltung eingestellt wird.

Ein noch weitere Aspekt der Erfindung bezieht sich auf ein Verfahren zum Betreiben einer LED mit einer Schaltung, die aufweist:

- eine Spule und einen mit der Spule in Serie geschalteten Schalter,
- wobei bei geschlossenem Schalter die Spule aufmagnetisiert wird und bei geöffneten Schalter die Spule in Form eines Stroms durch die LED entmagnetisiert, wobei in dem Entmagnetisierungsstrompfad bei geöffnetem Schalter ein Stromerfassungsmittel vorgesehen ist, das ein Strom-Erfassungssignal liefert, wobei bei Inbetriebnahme der Schaltung die LED-Spannung, durch entsprechende Ansteuerung des Schalters der Treiberschaltung, von einem niedrigen Wert aus zu einem stationären Betriebswert erhöht wird.

Nachfolgend soll die Erfindung anhand der beiliegenden Zeichnung näher erläutert werden. Es zeigen:

Fig. 1 schematisch das Schaltbild eines ersten Beispiels eines erfindungsgemäßen Notlichtgeräts;

Fig. 2 ein zweites Beispiel eines Notlichtgeräts;

Fig. 3 eine Grafik zur Ermittlung der Netzversorgungsspannung auf Basis von an der Ausgangsseite der Ladeschaltung gemessenen Betriebsparametern,

Fig. 4 eine weitere Grafik zur Ermittlung der Sekundärleistung der Ladeschaltung, welche zur indirekten Bestimmung der Lichtquellenleistung berücksichtigt wird,

Fig. 5 eine Illustration einer Batterieschaltung,

Fig. 6 eine erfindungsgemässe LED-Treiberschaltung, und

Fig. 7 die Ansteuerung des Treiberschalters sowie den sich ergebenden Diodenstrom.

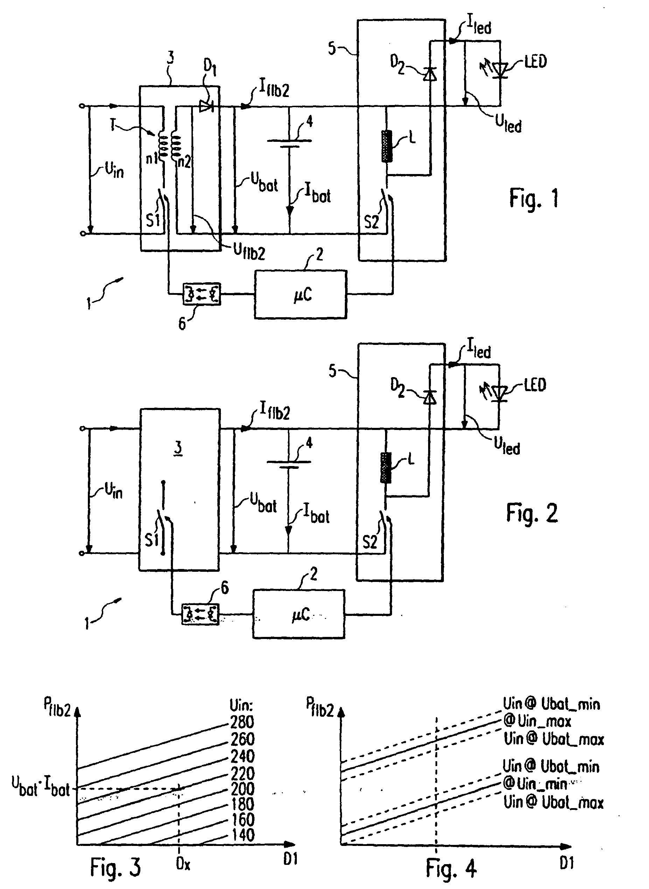

Das in Fig. 1 in vereinfachter Weise dargestellte und allgemein mit dem Bezugszeichen 1 versehene erfindungsgemäße Notlichtgerät ist im dargestellten Ausführungsbeispiel zum Betreiben einer LED als Notlichtquelle vorgesehen. Das Notlichtgerät 1 ist eingangsseitig an ein Stromversorgungsnetz angeschlossen, welches eine Netzversorgungsspannung $U_{in}$ zur Verfügung stellt, und weist als wesentliche Komponenten eine Steuereinheit 2, eine Ladeschaltung 3, eine Energiespeichereinheit 4 in Form einer Batterie bzw. eines Akkumulators sowie eine Treiberschaltung 5 auf.

Die Ladeschaltung 3 ist im dargestellten ersten Ausführungsbeispiel durch einen sog. Flyback-Konverter gebildet, der einerseits einen Transformator T mit einer Primärwicklung n1 und einer Sekundärwicklung n2 sowie andererseits einen steuerbaren Schalter S1 aufweist. In bekannter Weise kann durch ein entsprechendes abwechselndes Öffnen und Schließen des Schalter S1 die von der Netzversorgungsspannung $U_{in}$ zur Verfügung gestellte Energie auf die Sekundärseite des Flyback-Konverters 3 übertragen und zum Aufladen der Energiespeichereinheit 4 genutzt werden. Die Energieübertragung findet dabei im geöffneten Zustand des Schalters S1 statt, wobei hierzu auf der Ausgangsseite des Flyback-Konverters 3 ferner eine Diode $D_1$ vorgesehen ist. Derartige Flyback-Schaltungen finden aufgrund ihres einfachen Aufbaus und ihrer zuverlässigen Funktion in derartigen Notlichtgeräten vielfach Verwendung.

Die Ansteuerung des steuerbaren Schalters S1 erfolgt durch die Steuereinheit 2 des Notlichtgeräts, wobei die Ansteuerung insbesondere galvanisch getrennt über einen Optokoppler 6 erfolgt. Die Steuereinheit 2 steuert hierbei den Schalter S1 alternierend an, wobei sich der sog. Duty-Cycle D1 für den Schaltbetrieb des Schalters S1 wie folgt berechnet:

$$D1 = t_{on1}/(T - t_{on1})$$

$t_{on1}$ entspricht hierbei der Einschaltzeit des Schalters, während T die Gesamtdauer eines vollständigen Schaltzyklus für den Schalter S1 bezeichnet.

Denkbar ist auch, dass es sich bei der Ansteuerung von S1 um einen ‚Freischwinger' handelt und über den Duty-cycle vom Optokoppler 6 die Eigenfrequenz des ‚Freischwinger' beeinflusst wird.

Während eines Ladebetriebs des Notlichtgeräts 1 ist üblicherweise ausschließlich die Ladeschaltung 3 aktiv, um die Batterie 4 dauerhaft aufzuladen. Erst für den Fall, dass ein Notzustand vorliegt, der insbesondere durch Abweichungen in der Netzversorgungsspannung $U_{in}$ von vorbestimmten Soll-Werten gekennzeichnet ist, wird ein Notlichtbetrieb eingeleitet, in dem die Treiberschaltung 5 dazu genutzt wird, die LED anzusteuern. Die als Schaltregler ausgebildete Treiberschaltung 5 weist hierzu einen weiteren steuerbaren Schalter S2, eine Induktivität L sowie eine Diode $D_2$ auf. Durch alternierendes Ansteuern des Schalters S2 durch die Steuereinheit 2 wird auf diese Weise der LED ein Strom zur Verfügung gestellt, über welchen diese betrieben wird. Das Tastverhältnis, mit dem der Schalter S2 durch die Steuereinheit 2 angesteuert wird, kann dabei variiert werden, um die Höhe des der LED zugeführten Stroms und damit die Leistung, bei welcher die LED betrieben wird, einzustellen. Auf diese Weise kann in sehr eleganter Weise sichergestellt werden, dass auch bei schwankender Batterieleistung die LED trotz allem mit gleichbleibender Helligkeit betrieben wird.

Eine Funktion des Notlichtgeräts 1 besteht also darin, durch Beurteilung der Netzversorgungsspannung $U_{in}$ zu erkennen, ob ein Notzustand vorliegt, um ggf. einen Notlichtbetrieb zu veranlassen. Bislang war es bekannt, hierzu unmittelbar den Wert der Eingangsspannung $U_{in}$ für die Ladeschaltung 3 zu bestimmen, was allerdings aus den zuvor genannten Gründen mit Nachteilen verbunden ist.

Dabei kann auf eine direkte Messung der Netzversorgungsspannung $U_{in}$ verzichtet werden. Stattdessen ist vorgesehen, diese auf indirektem Wege zu ermitteln. Insbesondere ist vorgesehen, das lediglich Größen von Betriebsparametern des Notlichtgeräts 1 auf der Sekundärseite der Ladeschaltung 3 gemessen werden.

Bei dem ersten Beispiel gemäß Fig. 1 wird hierzu die auf der Sekundärseite des Sperrwandlers bzw. Flyback-Konverters 3 anliegende Spannung $U_{f1b2}$ gemessen, wozu insbesondere keine galvanische Trennung erforderlich ist, da diese Größe auf dem gleichen Bezugspotential liegt, wie die Steuereinheit 2, welchen den Messwert auswertet. Ist nun die Höhe dieser Sekundärspannung $U_{f1b2}$ bekannt, so kann ausgehend hiervon auf die Höhe der Eingangsspannung $U_{in}$ zurückgeschlossen werden. Bei eingeschaltetem Schalter S1 des Flyback-Konverters 3 besteht nämlich ein Zusammenhang zwischen Eingangsspannung $U_{in}$ und Sekundärspannung $U_{f1b2}$, der insbesondere von dem Wicklungsverhältnis zwischen den beiden Wicklungen n1 und n2 des Transformators T sowie von dem Duty-Cycle des Schalters D1 abhängig ist. Dieser Zusammenhang zwischen der einfach zu messenden Sekundärspannung $U_{f1b2}$ und der zu überwachenden Eingangsspannung $U_{in}$ ist nunmehr in Form einer Wertetabelle in der Steuereinheit 2 hinterlegt, so dass diese nach Messung der Sekundärspannung $U_{f1b2}$ in einfacher Weise die Höhe der Eingangsspannung $U_{in}$ bestimmen kann, ohne diese direkt messen zu müssen. Stellt nun die Steuereinheit 2 fest, dass die ermittelte Eingangsspannung $U_{in}$ außerhalb bestimmter Sollwert-Bereiche liegt, so deutet dies auf einen Notzustand hin, was die Steuereinheit 2 wiederum dazu veranlassen wird, einen Notbetrieb einzuleiten.

Die beschriebene Lösung ermöglicht also eine sehr einfache aber effektive Überwachung des Zustands der allgemeinen Stromversorgung. Ferner besteht ein besonderer Vorteil des in Fig. 1 dargestellten Ausführungsbeispiels darin, dass die Höhe der Eingangsspannung $U_{in}$ unabhängig davon bestimmt werden kann, ob die Notlicht-LED eingeschaltet ist oder nicht. Die Diode $D_1$ bewirkt nämlich durch ihre Sperrwirkung eine Trennung zwischen Sekundärspannung $U_{f1b2}$ und Batteriespannung $U_{Bat}$, so dass sich die Tätigkeit der Treiberschaltung 5 nicht auf den vorbeschriebenen Vorgang der Bestimmung der Eingangsspannung $U_{in}$ auswirkt.

Ein zweites, etwas allgemeineres Beispiel eines Notlichtgeräts ist in Fig. 2 dargestellt. Dieses entspricht in seinem Aufbau im wesentlichen dem in Fig. 1 gezeigten Notlichtgerät 1, allerdings ist nunmehr die Ladeschaltung 3 nicht durch einen Flyback-Konverter sondern generell durch eine Schaltungsanordnung gebildet, welche eine Potentialtrennung sowie einen wiederum durch die Steuereinheit 2 angesteuerten Schalter S1 aufweist.

Bei dieser allgemeineren Form besteht nicht zwangläufig ein bekannter Zusammenhang zwischen der Eingangsspannung $U_{in}$ und der Spannung auf der Ausgangsseite der Ladeschaltung 3. Dennoch kann auch hier die Höhe der Eingangsspannung $U_{in}$ auf indirektem Wege bestimmt werden, wobei hierzu nunmehr allerdings andere Betriebsgrößen gemessen werden.

Es handelt sich hierbei einerseits um die Batteriespannung $U_{bat}$ sowie andererseits um den Batteriestrom $I_{bat}$. Beide Größen können wiederum verhältnismäßig einfach, also ohne galvanische Trennung bestimmt werden, da sie wiederum ebenso wie die Steuereinheit 2, welche diese Messgrößen auswertet, auf dem gleichen Bezugspotential liegen.

Auf Basis dieser beiden Messgrößen $U_{bat}$ und $I_{bat}$ sowie des bekannten Duty-Cycles D1 für den Schalter S1 der Ladeschaltung 3 kann dann die Eingangsspannung $U_{in}$ bestimmt werden, da diese mit den drei bekannten Größen in einer Beziehung steht. Dies verdeutlicht die Grafik von Fig. 3, welche unterschiedliche Kennlinien der Sekundärleistung $P_{f1b2}$ der Ladeschaltung 3 in Abhängigkeit von dem Duty-Cycle D1 für den Schalter S1 zeigt. Diese Kennlinien werden beispielsweise bei der Herstellung des Notlichtgeräts ermittelt und wiederum in Form einer Tabelle in der Steuereinheit 2 hinterlegt. Es ist erkennbar, dass diese Kennlinien insbesondere auch von der Eingangsspannung $U_{in}$ abhängig sind. Sind nunmehr also der Duty-Cycle D1 sowie die Sekundärleistung $P_{f1b2}$ der Ladeschaltung 3 bekannt, so kann ebenso wie bei dem Beispiel von Fig. 1 auf die Höhe der Eingangsspannung $U_{in}$ zurück geschlossen werden.

Im dargestellten Beispiel von Fig. 3 wird also ermittelt, mit welcher Kennlinie die bekannte Kombination aus Duty-Cycle D1 und Sekundärleistung $P_{f1b2}$ der Ladeschaltung 3, welche bei deaktivierter Treiberschaltung 5 dem Produkt aus Batteriespannung $U_{bat}$ und Batteriestrom $I_{bat}$ entspricht, übereinstimmt. Bei den dargestellten Messwerten beispielsweise liegt dieser Wert auf der Kennlinie für eine Eingangsspannung $U_{in}$ von 220 Volt, was einem ordnungsgemäßen Zustand der allgemeinen Netzversorgung entspricht. Würde allerdings der ermittelte Wert auf einer Kennlinie liegen, die beispielsweise einer Eingangsspannung $U_{in}$ von 140 Volt oder 280 Volt entspricht, so würde dies die Steuereinheit 2 wiederum dahingehend interpretieren, dass ein Fehler in der Netzversorgung vorliegt und dementsprechend einen Notzustand einleiten.

In beiden gezeigten Beispielen kann also zuverlässig und ohne das Erfordernis einer direkten Messung der Eingangsspannung $U_{in}$ festgestellt werden, ob die Netzversorgung in Ordnung ist oder nicht. Eine Einschränkung bei dem Beispiel von Fig. 2 besteht allerdings darin, dass die beschriebene Bestimmung der Eingangsspannung $U_{in}$ nur im ausgeschalteten Zustand der Treiberschaltung 5 möglich ist. Bei dem Beispiel von Fig. 1 hingegen besteht diese Einschränkung - wie bereits erwähnt - nicht. Grundsätzlich allerdings wird die Steuereinheit 2 im Falle des Erkennens eines Fehlers eine Aktivierung der Treiberschaltung 5 und dementsprechend ein Einschalten der LED veranlassen.

Nach Aktivieren der Treiberschaltung 5 kann dann in der zuvor beschriebenen Weise der Schalter S2 hochfrequent angesteuert werden, um die LED mit einer gewünschten Leistung zu betreiben. Um in diesem Fall sicherzustellen, dass die Leistung der LED konstant ist, wäre es erforderlich, sowohl die LED-Spannung $U_{1ed}$ als auch den LED-Strom $I_{1ed}$ zu kennen, um eine Regelung zu ermöglichen.

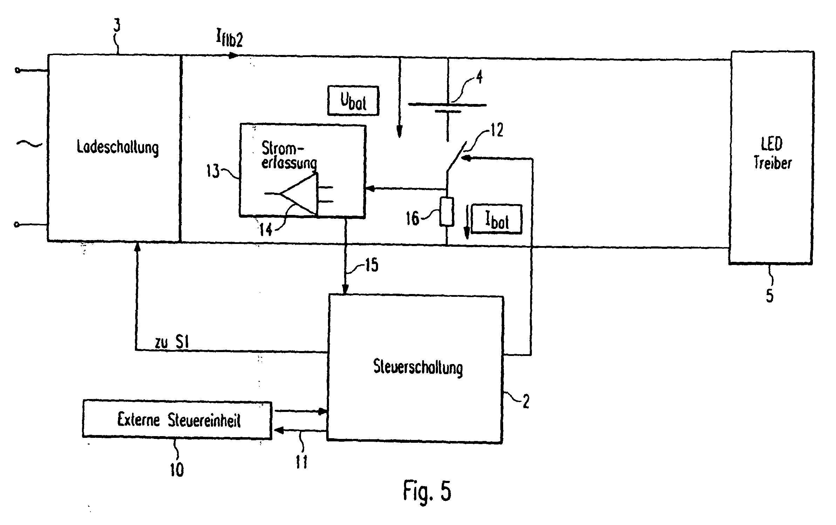

Bezug nehmend auf Figur 5 sollen nunmehr Einzelheiten der Verschaltung der Batterie 4 erläutert werden.

Wie in Figur 5 ersichtlich, ist in Serie zu der Batterie 4 ein Element 12 verschaltet, dass die Funktion eines Linearreglers und/oder eines Schalters aufweisen kann. Beispielsweise kann dieses Element 12 ein Transistor sein. In Serie zu der Batterie 4 ist weiterhin ein Messwiderstand (Shunt) 16 geschaltet, so dass der Spannungsabfall an dem Shunt 16 repräsentativ für den Batteriestrom ist.

Das an dem Shunt 16 abgegriffene Messsignal wird einer Stromerfassungseinheit 13 zugeführt, die vorzugsweise als diskrete Schaltung aufgebaut ist und einen Komparator 14 aufweisen kann. Der Komparator 14 ist nur ein Beispiel dafür, wie ein Offset auf das Messsignal vom Shunt 16 beaufschlagt werden kann. Die Beaufschlagung des Offsets dient dazu, in vereinfachter Weise den Batteriestrom wiedergebende Signale mit unterschiedlichen Polaritäten auswerten zu können, in dem der Offset so gewählt ist, dass die Signalpegel so verschoben werden, dass beide Signalpolaritäten nunmehr die gleiche Polarität und dafür unterschiedliche Amplituden aufweisen. Somit lässt sich in verhältnismäßig einfacher Weise beispielsweise durch die Steuerschaltung 2 sowohl der Batterieladestrom wie auch der Batterieentladestrom messen, die bekanntlich unterschiedliche Polaritäten haben. Der Steuerschaltung 2 wird also somit bevorzugt ein Messsignal 15 mit einheitlicher Polarität zugeführt.

Wenn der Transistor 12 als Linearregler ausgebildet ist, kann mittels der Stromerfassungseinheit 13 und Ansteuerung des Linearreglers 12 eine Regelung des Batterieentladestroms und/oder Batterieladestrome auf einen vorgegebenen Sollwert ausgeführt werden. In vereinfachter Weise kann diese Regelung natürlich auch als Schutzschaltung ausgeführt werden, so dass bei einem allzu hohen Batterieladestrom oder Batterieentladestrom der Schalter 12 geöffnet wird, um die Batterie 4 zu schonen.

Bei sehr langem Ausfall der Netzspannung kann eine Tiefentladung der Batterie 4 auftreten. Wenn die Batterie 4 tiefentladen ist, weist sie eine Spannung von beispielsweise 1,3 Volt auf, die also unter der zulässigen Spannung von beispielsweise 1,5 Volt liegt. Selbst wenn nunmehr eine ordnungsgemäße Netzspannung eingangsseitig an der Ladeschaltung 3 anliegt, und die Ladeschaltung 3 in der oben beschriebenen Weise ordnungsgemäß betrieben wird, wird die tiefentladene Batterie 4 die Sekundärseite der Ladeschaltung auf den einen unzulässig niedrigen Wert ziehen.

Diese Tiefentladung kann mittels Erfassung der Spannung der Batterie 4 erfasst werden. Bei Erfassung einer derartigen Tiefentladung wird der Schalter 12 vorzugsweise getaktet betrieben. Dabei wird vorzugsweise der Schalter 12 nur für eine verhältnismäßig kurzen Zeitraum geschlossen, wobei in diesem kurzen Zeitraum ein Ladevorgang der Batterie 4 erfolgt. Danach wird indessen der Schalter 12 wieder auf einen längeren Zeitraum geöffnet, so dass die Batterie 4 von der Sekundärseite der Ladeschaltung 3 abgetrennt ist und die Ladeschaltung 3 sekundärseitig wieder die ordnungsgemäße Spannung von beispielsweise 1,5 Volt bereitstellen kann. Somit liegt sekundärseitig während eines weit größeren Zeitraums ein ordnungsgemäßes Spannungsverhältnis vor.

Es liegt somit eine impulsförmige Ladung der tiefentladenen Batterie vor.

Während der Schalter 12 geöffnet ist, versorgt die eine wieder anliegende Netzspannung mittels der Ladeschaltung korrekt die angeschlossene LED-Treiberschaltung und LEDs. Bei kurzzeitig geschlossenem Schalter dagegen wird die Batterie schonend wieder aufgeladen. Beispielsweise kann das Tastverhältnis für den Schalter 12 derart gewählt sein, dass er nur während 10% der Gesamtzeitdauer geschlossen ist und entsprechend 90% geöffnet, so dass sich die Batterie in diesen 90% Zeitdauer erholen kann.

Bei erfasster Tiefentladung der Batterie mittels der Erfassung der Batteriespannung kann automatisch in diesem gepulsten Betrieb des Schalters 12 umgeschaltet werden. Vorzugsweise erfolgt die Überwachung der Batteriespannung über eine diskrete Schaltung und somit unabhängig vom Mikrocontroller 2 (siehe Figuren 1, 2), der ja womöglich bei zu niedriger Batteriespannung nicht voll funktionsfähig ist.

Im übrigen ist aus diesem Grund auch bevorzugt die Stromerfassungsschaltung 13 mit dem Komparator 14 als diskrete Schaltung und somit unabhängig vom Mikrocontroller 2 und dessen ordnungsgemäßem Betrieb gewählt.

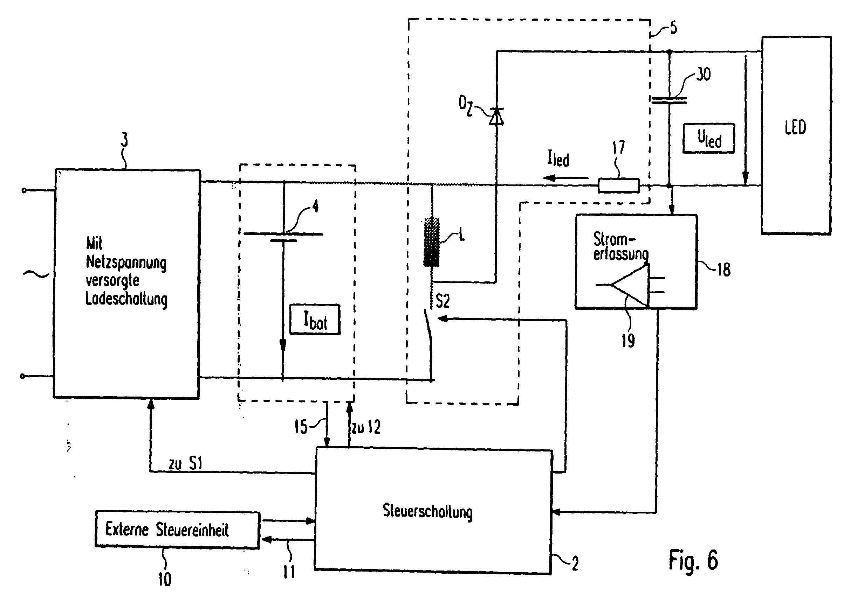

Figur 6 zeigt weitere Einzelheiten zur einer erfindungsgemäßen LED-Treiberschaltung 5. Sämtliche Merkmale der Batterieschaltung von Figur 5 lassen sich im übrigen (wahlweise) mit der Schaltung von Figur 6 kombinieren.

Das Grundprinzip der Treiberschaltung 5 ist, wie bereits eingangs beschrieben, ein Schaltregler, bei dem bei geschlossenem Schalter S2 die Spule L aufmagnetisiert wird und sich die magnetische Energie bei wiedergeöffnetem Schalter S2 über einen Strompfad entlädt, der in Serie eine Zenerdiode, wenigstens eine LED sowie einen Ohmschen Widerstand 17 aufweist.

Bekanntlich ist es verhältnismäßig einfach, den Stromfluß durch die Dioden bei geschlossenem Schalter S2 zu messen.

Dagegen ist es etwas komplexer, den Stromfluß durch die LEDs bei geöffnetem Schalter S2 zu messen.

Zur Stromerfassung ist erfindungsgemäß der Widerstand 17 in Serie zu den LEDs geschaltet, wobei dieser Widerstand 17 ein Beispiel für ein Stromerfassungsmittel darstellt.

Eine Stromerfassungseinheit 18 kann beispielsweise einen Komparator 19 aufweisen.

Ein Stromerfassungssignal, d.h. ein den Strom durch die LEDs wiedergebendes Signal wird der Steuerschaltung 2 zugeführt. Die Steuerschaltung 2 kann das Schaltverhalten des Schalters S2 u.a. abhängig von dem Stromerfassungssignal ausgestalten.

Ein Kondensator 30 ist parallel zu der wenigstens einen LED geschaltet. Der Kondensator 30 glättet den LED-Strom, indem er Energie speichert und die Spannung über der wenigstens einen LED im wesentlichen konstant hält. Der Kondensator 30 ist dabei derart bemessen, dass weiterhin die Regelung der LED-Spannung möglich ist.

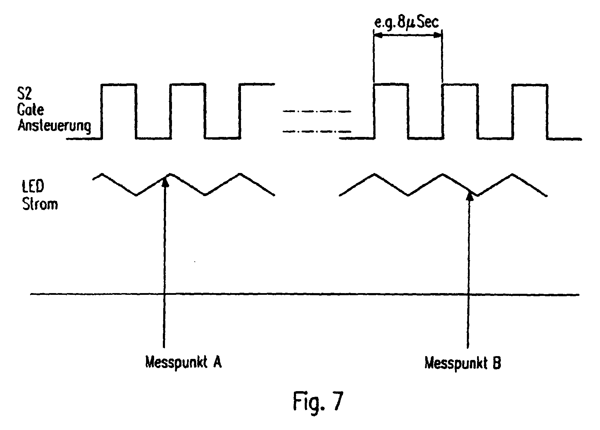

Figur 7 zeigt schematisch die Ansteuerung des Schalters S2, d.h. für den Fall, dass dieser Schalter als FET-Transistor ausgebildet ist, die Ansteuerung des Gate dieses Transistors in der Zusammenschau mit dem sich einstellenden Strom durch die LEDs. Während der Einschaltzeitdauer des Schalters S2 steigt der Strom durch die LEDs jeweils an. Während der Ausschaltzeitdauer sinkt er, getrieben durch die magnetische Energie der Spule L wieder ab. Somit ergibt sich ein um einen festen DC-Wert zickzackförmiger Verlauf des Stroms durch die LED. Die Stromerfassung soll nunmehr insbesondere den zeitlichen Mittelwert dieses Stroms ermitteln können, um somit beispielsweise die Leistung der LEDs entweder auf einen konstanten Wert oder auf einen frei wählbaren Wert (Dimming) wählen zu können.

Es ist vorgesehen, dass die Steuerschaltung 2, die das Schaltverhalten des Schalters S2 vorgibt und somit kennt, den Stromwert zu einem ersten Meßpunkt A sowie zu einem zweiten Meßpunkt B ermittelt, um daraus wiederum den Mittelwert zu bilden. Aus dem Mittelwert des Stromwerts zum Meßzeitpunkt A und Meßzeitpunkt B ergibt sich dann der zeitliche Mittelwert des LED-Stroms.

Der Meßpunkt B ist dabei so gewählt, dass er im Bereich des Endes des Ausschaltens des Schalters S2 liegt, während der Zeitpunkt A derart gewählt ist, dass er am Ende der Einschaltzeitdauer liegt.

Vorzugsweise wird für einen Messzyklus eine Messung mehrerer Minimal- und Maximalwerte ausgeführt. Somit lassen sich Ungenauigkeiten bezüglich des Messzeitpunkts herausmitteln. Für dieses Messprinzip sind die Messzeitpunkte mit der Taktung des Schalters S2 synchronisiert. Indessen kann es bei dieser Synchronisierung zu Ungenauigkeiten kommen, die bspw. durch die Verzögerungen von A/D-Wandlern begründet werden. Diese Ungenauigkeiten werden durch die Erfassung mehrere Werte herausgemittelt.

Somit lässt sich also der zeitliche Mittelwert des Stroms durch die LED erfassen, und die Steuereinheit 2 kann abhängig davon die Schaltfrequenz und/oder das Tastverhältnis des Schalters S2 einstellen. Zum Dimmen der LED kann die Steuereinheit 2 beispielsweise der hochfrequenten Taktung des Schalters S2 eine im Vergleich dazu niederfrequente Modulation beispielsweise in Form einer PWM-Modulation überlagern. Dies stellt eine alternative oder zusätzliche Möglichkeit zur Dimmung dar, da wie oben ausgeführt das Dimmen auch durch Änderung der hochfrequenten Taktung des Schalters S2 selbst erfolgen kann.

Es kann indessen das Dimmen der LED, d.h. die Einstellung des LED-Stroms auf einen definierten einwählbaren Wert, auch abhängig von anderen Größen erfolgen. Beispielsweise kann das Dimmen abhängig von einem erfassten Batterieentladestrom (siehe Schaltung von Figur 5) erfolgen, um somit die Batterielebenszeit zu verlängern.

Die Treiberschaltung 5 kann die LED auch dimmen, wenn der Mittelwert der Netzspannung, die die Ladeschaltung 3 versorgt, unter einen vorgegebenen Wert absinkt. Als weitere assistierende Maßnahme zur Verlängerung der Batterielebensdauer kann der Flyback-Konverter in der Ladeschaltung 3 in einen gepulsten Betrieb versetzt werden, so dass also der Flyback-Konverter assistierend zu der schwächer werdenden Batteriespannung die Treiberschaltung 5 versorgt.

Um eine Entladung der Batteriespannung zur Batterie 4 zu erfassen, kann die Batteriespannung erfasst werden (siehe wiederum Figur 5).

Weiterhin kann zusätzlich zu der LED-Stromerfassung eine LED-Spannungserfassung erfolgen.

Erfindungsgemäß kann eine Softstart-Funktion vorgesehen sein, bei der die Steuerschaltung 2 bei Inbetriebnahme zuerst einen verhältnismäßig geringen Teststrom durch die LED (s) fliessen lässt. Die Testmessung soll elektrische Parameter ermitteln, um herauszufinden, ob eine bzw. welche LED an die Treiberschaltung 5 angeschlossen ist. Beispielsweise kann ermittelt werden, welche LED-Spannung sich bei dem vorgegebenen Teststrom ergibt. Daraus können Rückschlüsse auf die Art (Farbe) und Anzahl der angeschlossenen LEDs getroffen werden, um wiederum abhängig davon den stationären Betriebsstrom angepasst an die ermittelten LED-Type zu regeln.

Grundsätzlich kann vorgesehen sein, dass die Steuereinheit 2 bei Inbetriebnahme den LED-Strom durch entsprechende Ansteuerung des Schalters S2 der Treiberschaltung 5 ausgehend von einem niedrigen Wert hin zu dem stationären Betriebswert für den LED-Strom erhöht.

Wenn das Anlegen des Teststroms das Fehlen oder einen Störfall einer LED ergibt, können automatisch in vorgegebenen Abständen eine Wiederholung des Anlegens der Test spannung erfolgen, bis das Einsetzen einer ordnungsgemäßen LED erfasst wird.

Wie gesagt kann der Strom durch die LED entweder durch Überlagerung einer niederfrequenten Modulation zu der hochfrequenten Taktung des Schalters S2 und/oder durch eine Veränderung (Tastverhältnis, Frequenz) der hochfrequenten Taktung selbst erfolgen.

## Patentansprüche

1. Schaltung zum Betreiben wenigstens einer LED, aufweisend:

   - eine Treiberschaltung (5) mit einer Spule (L) und einem mit der Spule in Serie geschalteten und hochfrequent getakteten Schalter (S2), wobei bei geschlossenem Schalter (S2) die Spule (L) aufmagnetisiert wird und bei geöffnetem Schalter (S2) die Spule (L) über einem Entmagnetisierungsstrompfad in Form eines Stroms durch die wenigstens eine LED entmagnetisiert,
   - eine Steuereinheit (2) zum Einstellen der Höhe des der wenigstens einen LED zugeführten Stroms durch alternierendes Ansteuern des Schalters (S2), wobei in dem Entmagnetisierungsstrompfad bei geöffnetem Schalter (S2) ein Stromerfassungsmittel (18) vorgesehen ist, das ein Strom-Erfassungssignal zu der Steuereinheit (2) liefert,

   **dadurch gekennzeichnet, dass**
   die Steuereinheit (2) dazu ausgestaltet ist, bei Inbetriebnahme eine Testmessung auszuführen, um die Art und Anzahl der an die Treiberschaltung (5) angeschlossen wenigstens einen LED herauszufinden und davon abhängig einen stationären Betriebsstrom durch die wenigstens eine LED zu regeln, wobei die Testmessung darin besteht, dass die Steuereinheit (2) einen verhältnismäßig geringen Teststrom durch die wenigstens eine LED fließen lässt und die sich beim vorgegebenen Teststrom ergebende LED-Spannung ermittelt.

2. Schaltung nach Anspruch 1, wobei die Steuereinheit (2) bei Inbetriebnahme den LED-Strom ausgehend von einem niedrigen Wert hin zu dem stationären Betriebswert für den LED-Strom erhöht.

**3.** Notlichtgerät,
aufweisend eine Schaltung nach einem der vorhergehenden Ansprüche.

**4.** Verfahren zum Betreiben wenigstens einer LED mit einer Schaltung, die aufweist:

- eine Treiberschaltung (5) mit einer Spule (L) und einem mit der Spule in Serie geschalteten und hochfrequent getakteten Schalter (S2), wobei bei geschlossenem Schalter (S2) die Spule (L) aufmagnetisiert wird und bei geöffneten Schalter (S2) die Spule (L) über einem Entmagnetisierungsstrompfad in Form eines Stroms durch die wenigstens eine LED entmagnetisiert,
- eine Steuereinheit (2) zum Einstellen der Höhe des der wenigstens einen LED zugeführten Stroms durch alternierendes Ansteuern des Schalters (S2),
wobei in dem Entmagnetisierungsstrompfad bei geöffnetem Schalter (S2) ein Stromerfassungsmittel (18) vorgesehen ist, das ein Strom-Erfassungssignal zu der Steuereinheit (2) liefert,

**dadurch gekennzeichnet, dass**
die Steuereinheit (2) bei Inbetriebnahme der Schaltung eine Testmessung ausführt, um die Art und Anzahl der an die Treiberschaltung (5) angeschlossen wenigstens einen LED herauszufinden und davon abhängig einen stationären Betriebsstrom durch die wenigstens eine LED zu regeln,
wobei die Testmessung darin besteht, dass die Steuereinheit (2) einen verhältnismäßig geringen Teststrom durch die wenigstens eine LED fließen lässt und die sich beim vorgegebenen Teststrom ergebende LED-Spannung ermittelt.

**Claims**

**1.** Circuit for operating at least one LED, having:

- a driver circuit (5) having a coil (L) and a switch (S2) which is connected in series with the coil and is clocked at high frequency,
the coil (L) being magnetized when the switch (S2) is closed and the coil (L) being demagnetized via a demagnetization current path in the form of a current through the at least one LED when the switch (S2) is open,
- a control unit (2) for setting the level of the current supplied to the at least one LED by controlling the switch (S2) in an alternating manner,
a current detection means (18) being provided in the demagnetization current path when the switch (S2) is open and providing the control unit (2) with a current detection signal,

**characterized in that**
the control unit (2) is configured to carry out a test measurement during start-up in order to find out the type and number of the at least one LED connected to the driver circuit (5) and to regulate a steady-state operating current through the at least one LED on the basis thereof,
the test measurement involving the control unit (2) allowing a relatively low test current to flow through the at least one LED and determining the LED voltage which results for the predefined test current.

**2.** Circuit according to Claim 1,
the control unit (2) increasing the LED current from a low value to the steady-state operating value for the LED current during start-up.

**3.** Emergency lighting device,
having a circuit according to one of the preceding claims.

**4.** Method for operating at least one LED with a circuit having:

- a driver circuit (5) having a coil (L) and a switch (S2) which is connected in series with the coil and is clocked at high frequency,
the coil (L) being magnetized when the switch (S2) is closed and the coil (L) being demagnetized via a demagnetization current path in the form of a current through the at least one LED when the switch (S2) is open,
- a control unit (2) for setting the level of the current supplied to the at least one LED by controlling the switch (S2) in an alternating manner,
a current detection means (18) being provided in the demagnetization current path when the switch (S2) is open and providing the control unit (2) with a current detection signal,

**characterized in that**
the control unit (2) carries out a test measurement during start-up of the circuit in order to find out the type and number of the at least one LED connected to the driver circuit (5) and to regulate a steady-state operating current through the at least one LED on the basis thereof,
the test measurement involving the control unit (2) allowing a relatively low test current to flow through the at least one LED and determining the LED voltage which results for the predefined test current.

**Revendications**

1. Circuit pour faire fonctionner au moins une LED, présentant :

    - un circuit d'attaque (5) avec une bobine (L) et un commutateur (S2) connecté en série avec la bobine et cadencé à haute fréquence, dans lequel en cas de commutateur (S2) fermé la bobine (L) est magnétisée, et en cas de commutateur (S2) ouvert la bobine (L) se démagnétise via un trajet de courant de démagnétisation sous la forme d'un courant à travers ladite au moins une LED,
    - une unité de commande (2) destinée à ajuster le niveau du courant fourni à ladite au moins une LED au moyen d'une commande alternée du commutateur (S2), dans lequel il est prévu dans le trajet de courant de démagnétisation en cas de commutateur (S2) ouvert un moyen de détection de courant (18), qui fournit un signal de détection de courant à l'unité de commande (2),

    **caractérisé en ce que**
    l'unité de commande (2) est agencée de manière à effectuer une mesure de test lors de la mise en marche, pour identifier le genre et le nombre de ladite au moins une LED connectée au circuit d'attaque (5) et réguler en conséquence un courant de fonctionnement stationnaire à travers ladite au moins une LED,
    dans lequel la mesure de test consiste **en ce que** l'unité de commande (2) fait circuler un courant de test relativement faible à travers ladite au moins une LED et détermine la tension de LED qui résulte du courant de test prescrit.

2. Circuit selon la revendication 1,
    dans lequel lors de la mise en marche l'unité de commande (2) augmente le courant de LED depuis une valeur basse jusqu'à une valeur de fonctionnement stationnaire pour le courant de LED.

3. Appareil d'éclairage de secours,
    présentant un circuit selon l'une des revendications précédentes.

4. Procédé pour faire fonctionner au moins une LED avec un circuit qui présente :

    - un circuit d'attaque (5) avec une bobine (L) et un commutateur (S2) connecté en série avec la bobine et cadencé à haute fréquence, dans lequel en cas de commutateur (S2) fermé la bobine (L) est magnétisée, et en cas de commutateur (S2) ouvert la bobine (L) se démagnétise via un trajet de courant de démagnétisation sous la forme d'un courant à travers ladite au moins une LED,
    - une unité de commande (2) destinée à ajuster le niveau du courant fourni à ladite au moins une LED au moyen d'une commande alternée du commutateur (S2),
    dans lequel il est prévu dans le trajet de courant de démagnétisation en cas de commutateur (S2) ouvert un moyen de détection de courant (18), qui fournit un signal de détection de courant à l'unité de commande (2),

    **caractérisé en ce que**
    l'unité de commande (2) effectue une mesure de test lors de la mise en marche du circuit, pour identifier le genre et le nombre de ladite au moins une LED connectée au circuit d'attaque (5) et réguler en conséquence un courant de fonctionnement stationnaire à travers ladite au moins une LED,
    dans lequel la mesure de test consiste **en ce que** l'unité de commande (2) fait circuler un courant de test relativement faible à travers ladite au moins une LED et détermine la tension de LED qui résulte du courant de test prescrit.

Fig. 1

Fig. 2

Fig. 3

Fig. 4

LED Treiber — 5

Ladeschaltung — 3

$I_{flb2}$

Strom-erfassung — 13

14

$U_{bal}$

4

12

16

$I_{bal}$

15

Steuerschaltung — 2

zu S1

Externe Steuereinheit — 10

11

Fig. 5

LED

$U_{led}$

30

5

17

$I_{led}$

Stromerfassung

18

19

$D_2$

S2

4

$I_{bat}$

zu 12

15

11

Steuerschaltung

2

Mit
Netzspannung
versorgte
Ladeschaltung

3

zu S1

Externe Steuereinheit

10

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6502044 B1
- GB 2258571 A
- JP 2000235055 A
- US 6304039 B1
- US 20050151485 A1
- US 20050110469 A1